# EUROPEAN PATENT APPLICATION

(11) **EP 2 769 940 A1**
(43) Date of publication of application: **27.08.2014**
(21) Application number: 14155547.4
(22) Date of filing: 18.02.2014
(51) Int. Cl.: B65G 39/02

(54) **Ball assembly and a method for manufacturing the same**

(30) Priority: 20.02.2013 GB 201302996
(71) Applicant: CONVEYOR UNITS LIMITED, Stourport-on-Severn Worcestershire DY13 9PT (GB)
(72) Inventor: Toye, Edward, Stourport-on-Severn, DY13 9PT (GB)
(74) Representative: Palmer, Nicholas James

(57) **Abstract**

A ball assembly (110) including a support cup (112) within which a ball member (114) is supported for rotation in any direction about its centre point with a plurality of ball bearing elements (116) between the ball member (114) and the support cup (112), a part of the ball member being exposed above the support cup for contacting an article movable over the assembly, wherein a drainage element (124) is provided, engaging the support cup (112) and affording at least one drainage passage (128) for draining the support cup.

## Description

This invention relates to a ball assembly. Embodiments of the invention are suitable for use in a ball table or conveyor. The invention also relates to a method of manufacturing a ball assembly.

Ball tables or conveyors are well known, comprising a plurality of ball assemblies mounted in a frame. Each ball assembly houses a ball member, supported in such a way as to be able to rotate in any direction about its centre point, and with a part of its surface presented upwardly to enable an article supported on a number of the ball assemblies to move in any direction over them. Movement of the article may be effected manually if the table is horizontally oriented, or under gravity if it is inclined. Typically, each ball assembly comprises a support cup in which the ball member is carried, with a plurality of ball bearing elements interposed between the ball member and the support cup.

The ball assemblies are vulnerable to having their free-running qualities degraded due to the ingress of contaminants, e.g. dirt and/or water, where the ball member surfaces are exposed upwardly. Dirt may be transferred to the exposed surface of the ball member from the articles being transported thereover, and carried into the interior of the ball assembly as the ball member rotates in use. Water, e.g. rain water, falling on a ball assembly can reach its interior and build up within the support cup. Therefore it is advantageous to provide for drainage of the support cup.

A known issue with such known ball assemblies is that drainage is time consuming and expensive to provide. Traditional methods of providing drainage require the drilling of drainage holes individually through the support cup. At least one, preferably a plurality of small holes is required rather than one larger hole so as not to allow the ball bearing elements to drop out.

According to one aspect of the invention we provide a ball assembly including a support cup within which a ball member is supported for rotation in any direction about its centre point with a plurality of ball bearing elements between the ball member and the support cup, a part of the ball member being exposed above the support cup for contacting an article movable over the assembly, wherein a drainage element is provided, engaging the support cup and affording at least one drainage passage for draining the support cup.

The drainage element may fit in an aperture in the support cup.

The aperture may be at a lowermost part of the support cup.

The drainage element may be of a plastics material.

The drainage element may be of a formed or moulded metal.

The ball assembly may include a casing at least partially surrounding the outside of the support cup.

The casing around the support cup may also be of a plastics material.

The casing may include the drainage element within its structure.

The drainage element may afford a plurality of drainage passages.

The diameter of each drainage passage may be approximately 1.5mm.

The surface of the drainage element facing the ball may be relieved.

The casing may engage with a retaining annular member.

A ball conveyor may comprise a plurality of ball assemblies.

According to another aspect of the invention we provide a method of manufacturing a ball assembly; the method including: providing a support cup and a ball member therein, supported by ball bearing elements, for rotation in any direction about its centre point, a part of the ball being exposed above the support cup for contacting an article movable over the assembly; providing a drainage element; and engaging the drainage element with the support cup to afford at least one drainage passage for draining the support cup.

Providing a drainage element may include providing a drainage element manufactured from a plastics material.

Providing a drainage element may include providing a drainage element manufactured from a formed or moulded metal.

The method may further comprise providing a casing partially surrounding the outside of the support cup.

Providing a casing may include providing a casing manufactured of a plastics material.

Providing a casing may include providing a casing including an integral drainage element.

Providing a drainage element may comprise providing a drainage element affording a plurality of drainage passages.

Providing a drainage element may comprise providing a drainage element wherein the diameter of the or each drainage passage is approximately 1.5mm.

The drainage element may be provided such that the drainage element is relieved from the inner surface of the support cup.

Embodiments of the invention will now be described by way of example only with reference to the accompanying drawings, wherein:
Figure 1 is a sectional view of a ball assembly in accordance with the invention;
Figure 2a and 2b are views of a drainage element of the ball assembly, in plan and elevation respectively.
Figure 3 is a sectional view of a ball assembly in accordance with a second embodiment of the invention;
Figure 4 is a cross-sectional view of the support cup of the ball assembly shown in figure 3;
Figures 5 and 6 are, respectively, sectional and plan views of a casing, of the ball assembly shown in figure 3; and
Figure 7 is an enlarged view of part of figure 3, showing the arrangement of ball bearing elements thereof.

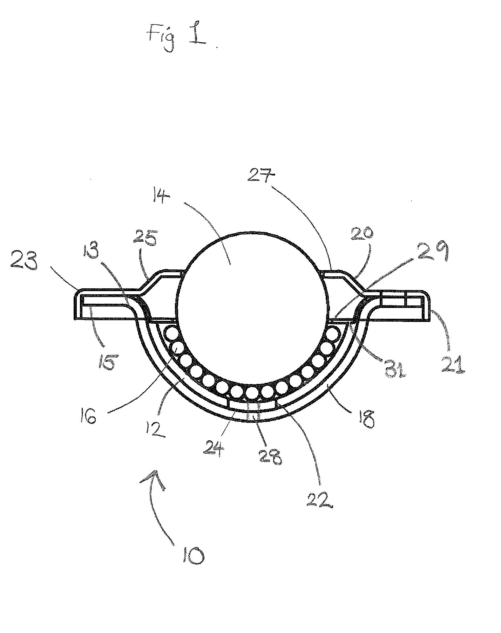

Referring to figure 1, a ball assembly 10 is shown, comprising: a support cup 12 and a ball member 14. The ball member 14 is supported in the support cup 12 by a plurality of ball bearing elements 16 interposed between the ball member 14 and the internal surface of the support cup 12. These bearing elements 16 allow the ball member 14 to rotate freely about its centre in any direction within the support cup 12.

The support cup 12 has a substantially part-spherical internal surface. Towards the top of the support cup 12, the surface diverges away from the part-spherical shape, illustrated here by the gap between the ball bearing elements 16 and the internal face of the cup 12. Typically, the cup 12 may be a pressing of a suitable sheet steel material.

An outer casing 18 holds the support cup 12, ball bearing elements 16 and the ball member 14. The casing 18 follows the part-spherical shape of the support cup 12, and extends above the support cup in an radiussed portion 13 away from the ball member 14, into a horizontal radial flange portion 15 extending away from the ball member 14 to allow engagement with a ball table frame.

A retaining member 20 is engaged at the top of the casing to prevent the ball member 14 from being removed. The retaining member 20 has a flange portion 23 in face to face engagement with the flange portion 15 of the casing, a downward wall portion 21 overhanging the casing flange portion 15, towards the ball member 14 extends a frustoconical portion 25, ending in an annular portion 27 in light, non-rotationally-restricting contact with the ball member 14. A second retaining member 29 extends from a portion which engages with flange portions 15, 23 along the inside of the casing 18 to the top of the support cup 12, and then has an annular portion 31 extending close to the ball member 14, to stop the bearing elements 16 from being displaced from the support cup 12. The casing 18, and retaining members 20, 29 are of a suitable material, e.g. sheet steel of suitable type and thickness.

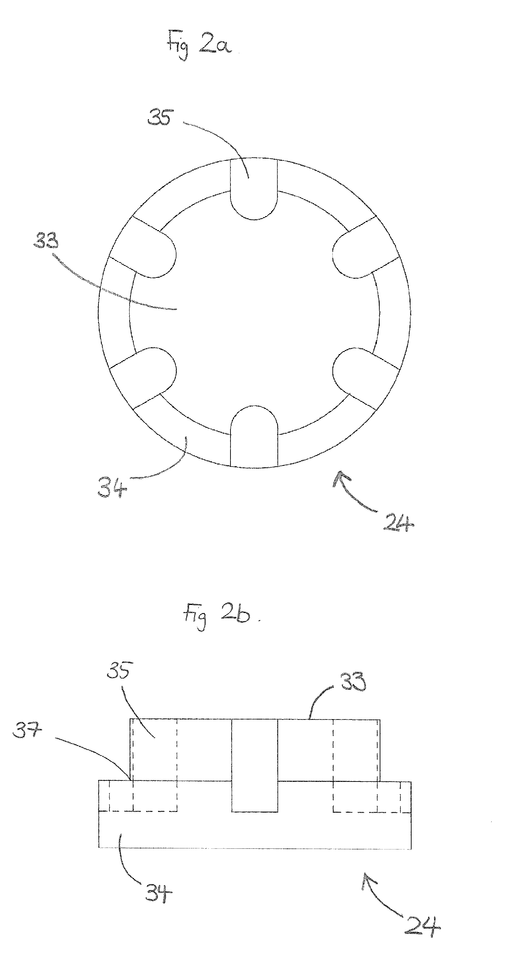

A drainage aperture 22 is located at the lowermost point of the support cup 12. The aperture is substantially circular, extending through the support cup 12 and the casing 18. The aperture 22 receives a drainage element 24 pressed into engagement with the aperture in the support cup 12 and casing 18. The drainage element 24 has a plurality of drainage passages 28 to allow the ball assembly 10 to drain, while not allowing the bearing elements 16 to drop out. Figure 2a shows an enlarged view of the drainage element 24. The drainage element 24 has upper and lower portions 33, 34 which are generally cylindrical, the latter having a larger diameter than the former, which define a step formation 37 for keeping the drainage element 24 in the correct position within the support cup 12. The upper portion 33 has grooves 35 spaced around its periphery. When the drainage element 24 is pushed into engagement within aperture 22 of the support cup 12 the grooves 35 define drainage passages with the inside surface of the aperture 22. Figure 2b shows the drainage element 24 from a side view. The grooves 35 around the periphery of the upper portion 33 continue onto the top surface of the wider base portion 34. In this way, the drainage passages are radially offset from a central axis of the drainage element 24 (the central axis being aligned with the axis defined centrally through the aperture 22).

It will be appreciated that although the drainage element 24 herein is described with the top portion 33 pushed into engagement from the bottom of the casing 18 and support cup 12, it could also be in an opposite orientation with the top portion 33 facing downwards in a cooperating support cup and still provide drainage. Additionally, the drainage grooves 35 could extend downwards from the upper portion 33 of the drainage element 24 through the base portion 34 as apertures. Alternatively, the upper portion 33 could also have drainage apertures rather than grooves 35.

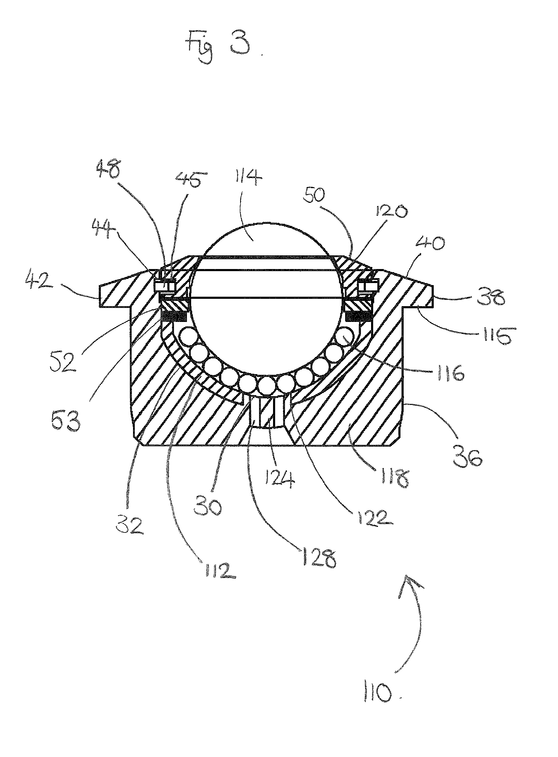

Figure 3 illustrates a second embodiment of the invention. Where aspects of this embodiment are the same and/or perform the same function as in the first embodiment the same reference numerals are used, prefixed by 1.

The ball assembly 110 comprises; a main ball member 114, a support cup 112, and ball bearing elements 116. The interior shape of the casing 118 follows the part-spherical shape of the support cup 112 and is substantially cylindrical around the outside 36. The casing 118 differs from the casing 18 in that, instead of a metal pressing, it is a moulded component of a suitable plastics material.

Towards the top of the casing 118, is an outwardly extending flange portion 42, for engagement with the ball conveyor frame, comprising; a lower downward facing portion 115, an upwardly extending peripheral wall portion 38, and a frustoconical upper portion 40 for facilitating liquid and/or debris flow away from the ball assembly 110 when in use.

A retaining member 120 is situated within the top of the casing 118. The retaining member 120 is annular and in light non-restricting contact with the ball member 114, it has a frustoconical top surface portion 50 for the facilitation of the flow of debris and/or liquid away from the ball assembly 110.

The inside of the top portion 42 and the peripheral wall of the retaining member 120 have grooves 44, 45. An annular member 46 such as a spring ring engages the respective grooves 44, 45 to hold the casing 118 and retaining member 120 together.

Beneath the retaining member 120 there are two additional annular retaining members 52, 53 to prevent the ball bearing elements 116 from moving outside the support cup 112.

The support cup 112 has a substantially circular support cup aperture 122 at its lowermost point. The casing 118 has an integrated drainage element 124, which is substantially cylindrical and projects above the general inner surface of the casing 32, it fits closely within the support cup aperture 122. The drainage element 124 has a plurality of drainage passages 128 extending downwardly through the drainage element 124. The raised drainage element 30 allows the ball bearing elements 116 to roll across the entire inner surface 30, 26 freely. The casing 118 and the drainage element 124 are preferably moulded in one piece, reducing processing time and expense.

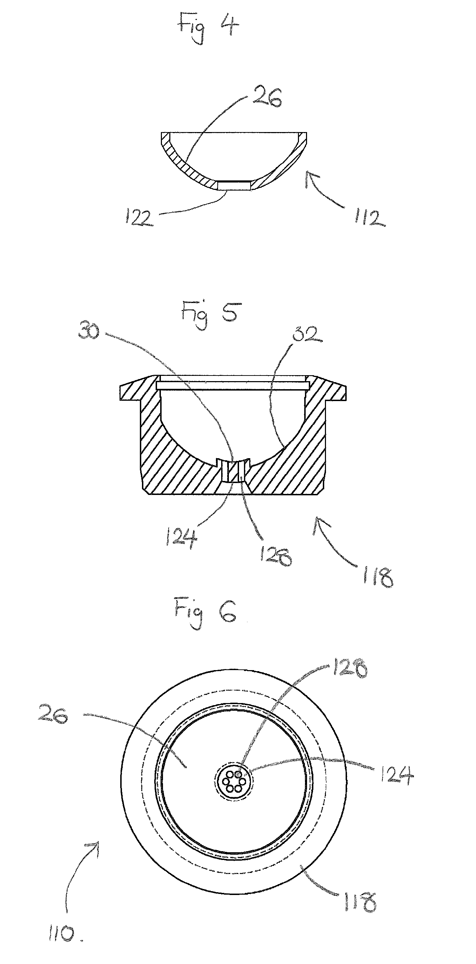

Figures 4 and 5 show the support cup 112, and the casing 118. The aperture 122 is shown at the centre bottom area of the support cup 112, and the raised drainage element 30, 124 is shown at the corresponding point on the casing 118.

Referring now to figure 6, this shows the cylindrical casing 118 around the outside of the ball assembly 110, the inside surface of the support cup 26, with the engaged drainage element 124 in the centre. Within the drainage element 124 a plurality of drainage passages 128 are present in the form of small apertures. It will be appreciated that the drainage passages can be of many arrangements within the drainage element 124 while still allowing the support cup 112 to drain. In embodiments, the drainage passages 128 are radially offset from a central axis of the drainage element 124 (the central axis being aligned with the axis defined centrally through the support cup aperture 122).

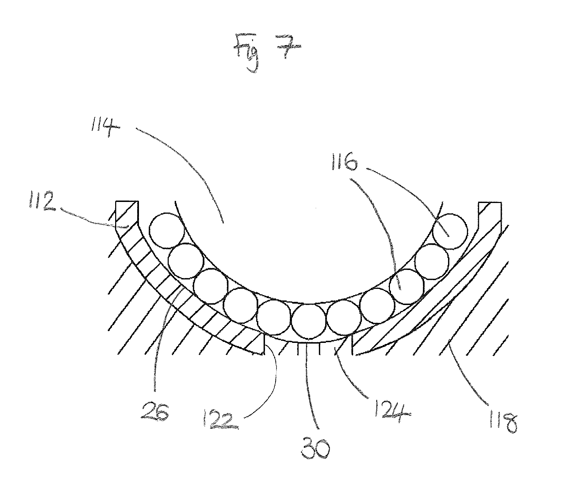

Referring to figure 7, an enlarged view of a lower part of the ball assembly 110 is shown. The ball bearing elements 116 are shown in contact with the main ball member 114. The upwardly facing surface 30 of the drainage element does not follow the inner surface profile of the support cup 26 so that a clearance is provided between the ball bearing elements 116 and the surface 30. There is no load bearing contact through the main ball member 114 and the bearing elements 116 onto the drainage element 124. Hence, a drainage element manufactured of a plastics material can function satisfactorily over a long service life.

It will also be appreciated that though the description here describes the ball assembly with the ball exposed to the top of the assembly, other orientations of the assembly may also be useful (for example, a type of castor wheel allowing a load to move across a surface).

In embodiments, the ball assemblies 10,.110 may include between 100 and 150 ball bearing elements 16, 116. In embodiments, the ball assemblies 10, 110 include 125 ball bearing elements 16, 116.

In embodiments, the drainage passages 28, 128 have a diameter of between 1 mm and 2mm. Preferably, the drainage passages 28, 128 are have a diameter of approximately 1.5mm.

In embodiments, the drainage aperture 22 and/or support cup aperture 122 have a diameter of approximately 8mm.

In embodiments, the drainage element 24, 124 may be made of a formed or moulded metal.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A ball assembly including a support cup within which a ball member is supported for rotation in any direction about its centre point with a plurality of ball bearing elements between the ball member and the support cup, a part of the ball member being exposed above the support cup for contacting an article movable over the assembly, wherein a drainage element is provided, engaging the support cup and affording at least one drainage passage for draining the support cup.

2. A ball assembly according to claim 1, wherein the drainage element fits in an aperture in the support cup.

3. A ball assembly according to claim 2, wherein the aperture is at the lowermost part of the support cup.

4. A ball assembly according to any one of the preceding claims, wherein the drainage element is of a plastics material.

5. A ball assembly according to any one of claims 1 to 3, wherein the drainage element is of a formed or moulded metal or a formed or moulded metal.

6. A ball assembly according to any one of the preceding claims, wherein the ball assembly has a casing at least partially surrounding the outside of the support cup.

7. A ball assembly according to claim 6, wherein the casing is of a plastics material.

8. A ball assembly according to claim 6 or claim 7, wherein the casing includes the drainage element within its structure.

9. A ball assembly according to any one of the preceding claims, wherein the drainage element affords a plurality of drainage passages.

10. A ball assembly according to any one of the preceding claims, wherein the diameter of the or each drainage passage is approximately 1.5mm.

11. A ball assembly according to any one of the preceding claims, wherein the surface of the drainage element facing the ball is relieved.

12. A ball assembly according to claim 6 or any claim appendent thereto, wherein the casing engages with a retaining annular member.

13. A ball conveyor, comprising a plurality of ball assemblies according to any one of the preceding claims.

14. A method of manufacturing a ball assembly, the method including:
providing a support cup and a ball member therein, supported by ball bearing elements, for rotation in any direction about its centre point, a part of the ball being exposed above the support cup for contacting an article movable over the assembly;
providing a drainage element; and
engaging the drainage element with the support cup to afford at least one drainage passage for draining the support cup.
